# EUROPEAN PATENT APPLICATION

(11) **EP 4 684 674 A1**
(43) Date of publication of application: **28.01.2026**
(21) Application number: 25190628.5
(22) Date of filing: 21.07.2025
(51) Int. Cl.: A43B 3/00, A43B 17/00, B33Y 80/00

(54) **BODY WEAR ARTICLE AND METHOD OF MANUFACTURING FOOTWEAR**

(30) Priority: 25.07.2024 JP 2024120329
(71) Applicant: ASICS Corporation, Kobe-shi, Hyogo 650-0021 (JP)
(72) Inventor: IWAKIRI, Midori, Kobe-shi, Hyogo 650-0021 (JP); WAKASUGI, Shinsaku, Kobe-shi, Hyogo 650-0021 (JP); TSUCHIDA, Shoumu, Kobe-shi, Hyogo 650-0021 (JP); HATANO, Genki, Kobe-shi, Hyogo 650-0021 (JP)
(74) Representative: TBK

(57) **Abstract**

The present disclosure provides a body wear article and a method of manufacturing footwear that are capable of ensuring the original appearance and functionality of a body wear article, while also enabling appropriate management using identification information. A body wear article 200 is utilized by being fitted along a portion of the body, and includes: a main body 210; and an information label 220 that is manufactured during manufacturing of the main body 210, and includes information label 220 includes identification information that identifies the main body 210 and a joined portion 230 that is joined to the main body 210.

## Description

### CROSS-REFERENCE TO RELATED APPLICATION

This application claims priority to Japanese Patent Application No. 2024-120329, the disclosures of which are incorporated herein by reference in their entirety.

### BACKGROUND

### Technical field

The present disclosure relates to a body wear article and a method of manufacturing footwear.

### Background Information

Conventionally, products that are manufactured and then sold are assigned identification information that identifies the product. As a result of using identification information, for example, it is possible to manage the manufacturing information, design information, and shipping and sales information of the product, as well as the usage history and fault history.

Furthermore, in recent years, it has become possible to manufacture products using three-dimensional lamination methods, and products that meet individual user specifications are now being manufactured and sold. In a case where a three-dimensional lamination method is used to manufacture a product, after molding the product, post-processing steps such as a support member removal step, an excess material separation step, a washing step, a drying step, an ultraviolet irradiation step, a heat curing step, polishing, and coating are carried out, as well as steps such as a quality check and the like. In such a situation, it is considered important to appropriately manage each product, and to improve so-called traceability.

For example, in the article providing system described in Japanese Unexamined Patent Application Publication No. 2019-207557, when a three-dimensional object is manufactured by a three-dimensional lamination method based on 3D model data selected by a user, an article that is desired by the user is provided as a result of accepting customizations made by the user with respect to the 3D model data. Here, customization refers to adding text, such as a name, message, purchase location, purchase date and time, and individual identification information to an arbitrary position of the 3D model data, and then adding the text to the surface or interior of the provided article (three-dimensional object). As a result, the traceability of the article (three-dimensional object) can be ensured.

### SUMMARY

However, in Japanese Unexamined Patent Application Publication No. 2019-207557, because the identification information is added directly to the surface or interior of the provided product (three-dimensional object), there is a concern that the original appearance and functionality of the product (three-dimensional object) may be impaired. For example, in the case of a product that is worn by a user, such as clothing, footwear, or an accessory, it is particularly important that the original appearance and functionality of the product are ensured.

Therefore, an object of the present disclosure is to provide a body wear article and a method of manufacturing footwear that are capable of ensuring the original appearance and functionality of a product, while also enabling appropriate management using identification information.

An aspect of the present disclosure provides a body wear article. The body wear article includes: a main body; and an information label that is manufactured during manufacturing of the main body. The information label includes identification information that identifies the main body and a joined portion that is joined to the main body.

According to such an aspect, because the information label is manufactured during manufacturing of the main body, includes the joined portion that is joined to the main body, and further includes identification information that identifies the main body, it is possible to ensure the original appearance and functionality of the body wear article, while also enabling appropriate management using the identification information.

An aspect of the present disclosure is a method of manufacturing footwear including a three-dimensional lamination molded article. The method of manufacturing footwear includes manufacturing, on a platform, a footwear main body and an information label having a joined portion that is joined to the footwear main body. The information label is manufactured to include identification information that identifies the footwear main body, or printing or processing is performed to include the identification information on the information label after the manufacturing of the information label.

According to such an aspect, the information label includes the joined portion that is joined to the footwear main body, and is manufactured during manufacturing of the footwear main body. Because the information label is manufactured to include identification information that identifies the footwear main body, or printing or processing is performed to include the identification information on the information label after the manufacturing of the information label, it is possible to ensure the original appearance and functionality of the footwear, while also enabling appropriate management using identification information.

### BRIEF DESCRIPTION OF THE DRAWINGS

FIG. 1 is an external side view showing an overview of footwear 100 (body wear article) according to an embodiment of the present disclosure.
FIG. 2 is an external perspective view showing an overview of an insole 200 (body wear article) according to an embodiment of the present disclosure.
FIG. 3 is a diagram for describing information that is managed with respect to the footwear 100 or the insole 200 according to an embodiment of the present disclosure.
FIG. 4A is a diagram showing a state where a label 220 is connected to an insole main body 210 via a plurality of (two in this case) joined portions 230A.
FIG. 4B is a diagram showing a state where the label 220 is connected to the insole main body 210 via two joined portions 230B.
FIG. 4C is a diagram showing a state where the label 220 is connected to the insole main body 210 via two joined portions 230C.
FIG. 4D is a diagram showing a state where the label 220 is connected to the insole main body 210 via two joined portions 230D.
FIG. 5 is a diagram for describing the position in which the joined portion 230 is arranged on the insole main body 210.
FIG. 6A is a diagram showing a joined portion 231A in which a cross-sectional shape is a square shape.
FIG. 6B is a diagram showing a joined portion 231B in which a cross-sectional shape is a star shape.
FIG. 6C is a diagram showing a joined portion 231C in which a cross-sectional shape is a circle shape.
FIG. 7A is a diagram showing a state where a label 220A is stored in the insole main body 210 according to an embodiment of the present disclosure.
FIG. 7B is a diagram showing a state where a label 220B is stored in the insole main body 210 according to an embodiment of the present disclosure.
FIG. 8 is a diagram showing an example of a label 220 having a solid surface.
FIG. 9A is a diagram showing an example in which labels 220L and 220R are provided that each correspond to left and right insole main bodies 210L and 210R.
FIG. 9B is a diagram showing an example in which labels 221L and 221R are provided that each correspond to the left and right insole main bodies 210L and 210R.
FIG. 10A is a diagram showing the positional relationship between the insole main body 210 and the label 220, which are molded as a result of being laminated on a platform P.
FIG. 10B is a plan view showing the positional relationship between the molded insole main body 210 and the label 220.
FIG. 11A is a diagram showing, in relation to the joined portion 230 that joins the insole main body 210 and the label 220, the position at which the joined portion 230 is molded on the platform P.
FIG. 11B is a diagram showing, in relation to the joined portion 230 that joins the insole main body 210 and the label 220, the position at which the joined portion 230 is molded, at an angle with the platform P.
FIG. 12A is a diagram showing the label 220, which is formed of a solid 221 and a lattice structure 222.
FIG. 12B is a diagram showing the label 220, which is formed of a solid 221 and a hollow structure 223.
FIG. 13 is a diagram showing an example of a sequence by which the insole 200 is molded by combining a model of the insole main body 210 and a model of the label 220 (including identification information).
FIG. 14 is a diagram showing a state where the label 220 is connected to the insole main body 210 by a loop-shaped joined portion 330.
FIG. 15 is a diagram showing an example in which a label 320 is formed by the shape of the identification information itself.
FIG. 16 is a diagram showing an overview of a product management system 300.

### DETAILED DESCRIPTION

Hereinafter, a preferred embodiment of the present disclosure will be described in detail with reference to the accompanying drawings. Note that the embodiment described below is merely a specific example of carrying out the present disclosure, and is not to be construed as limiting the present disclosure. In addition, to facilitate understanding of the description, components that are common to each drawing are denoted by the same reference signs whenever possible, and duplicated descriptions are sometimes omitted.

### <Embodiment>

### [Configuration of Footwear and Insole]

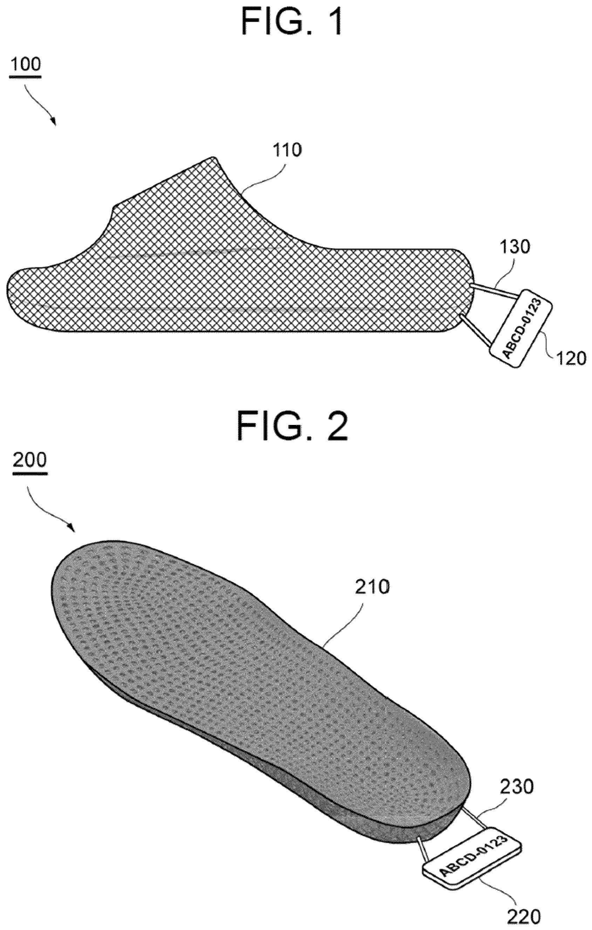

FIG. 1 is an external perspective view showing an overview of footwear 100 (body wear article) according to an embodiment of the present disclosure. As shown in FIG. 1, the footwear 100 (body wear article) includes a footwear main body 110 (main body), a label 120 (information label), and a joined portion 130.

The footwear 100 is manufactured by molding the footwear main body 110, the label 120, and the joined portion 130 using a three-dimensional lamination method. Examples of the molding method include a material extrusion method such as fused deposition modeling (FDM), a photolithography method such as digital light processing (DLP), a stereolithography (SLA) method, a liquid crystal display (LCD), a powder bed fusion method such as selective laser melting (SLM), electron beam melting (EBM), and an inkjet method. An appropriate method may be used depending on the shape, function, design, material, and the like, of the footwear main body 110 to be manufactured.

Note that, rather than the footwear 100 such as that shown in FIG. 1 (the entire footwear), an insole, which is a portion of the footwear, may be molded using a three-dimensional lamination method.

FIG. 2 is an external perspective view showing an overview of an insole 200 (body wear article) according to an embodiment of the present disclosure. As shown in FIG. 2, the insole 200 (body wear article) includes an insole main body 210 (main body), a label 220 (information label), and joined portions 230.

The insole 200 is manufactured by molding the insole main body 210, the label 220, and the joined portions 230 using a three-dimensional lamination method.

The footwear main body 110 and the insole main body 210 are molded, for example, from 3D model data based on scan data of a user's foot, and are molded so as to match the shape of the user's foot.

The label 120 is simultaneously molded with the footwear main body 110. Here, "simultaneously" includes the period of time in which the footwear main body 110 is molded, and "simultaneously molded" refers to the footwear main body 110 and the label 120 being completed together in a single molding operation. The label 120 includes identification information that identifies the footwear main body 110.

The joined portions 130 join the footwear main body 110 and the label 120.

The label 120 and the joined portion 130 may be molded using the material used to mold the footwear main body 110, or may be molded using a different material and/or different color to the material of the footwear main body 110.

Similarly, the label 220 is simultaneously molded with the insole main body 210, and includes identification information that identifies the insole main body 210. The joined portions 230 join the insole main body 210 and the label 220. The label 220 and the joined portions 230 may be molded using the material used to mold the insole main body 210, or may be molded using a different material and/or different color to the material of the insole main body 210.

### [Identification Information]

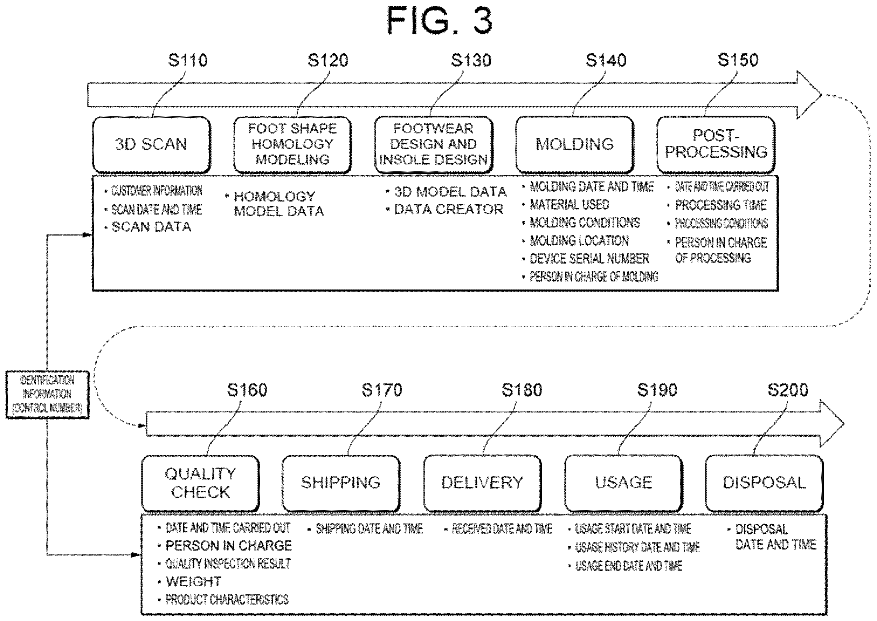

FIG. 3 is a diagram for describing information that is managed with respect to the footwear 100 or the insole 200 according to an embodiment of the present disclosure. As shown in FIG. 3, the footwear and insole that are manufactured using a three-dimensional lamination method are delivered to the user through the processing of steps S110 to S200.

In step S110, the user, for example, visits a store in which a 3D scanner is installed and scans the shape of the user's foot, or scans the shape of the user's foot at home using a smartphone. Here, customer information including the user's name, address, contact details, age, sex, and purchase history, the shape of the user's foot, the scan date and time of the scan, and the scan data are recorded. Further, body information relating to the body, which has an effect on changes in the product due to use, may also be recorded. For example, information relating to the user's height, weight, sex, the size or shape of the body part corresponding to the product, and movement trends may also be included. The information relating to movement trends includes, for example, information relating to trends in the way of walking or running (for example, the pitch rate, stride width, pronation angle and type, ground contact type, and foot pressure). In a case where the product is a shoe or an insole, the size or shape of the body part corresponding to the product includes, for example, the foot size, arch size or height, and foot shape.

Furthermore, in a case where a product is ordered by the user, product information relating to the product type, product shape and color, and the like, may also be included and recorded. For example, the user uses a terminal installed in a store, or the user uses a terminal such as the user's smartphone, and inputs the product type (model), and product shape and color of the desired product. Here, the desired product may also be a product that is being ordered (which includes being actually ordered and under consideration for ordering) by the user. In addition, it may also be possible to set the product shape and color in detail for each product and product part. Also, the product information is not limited to information that is premised on an order, and may include preference information including the user's preferred product type (model), product shape and color, and the like.

Note that the product desired by the user may be a made-to-order product, a small-lot product, or a mass-produced, commercially available product.

In step S120, homology modeling processing of the shape of the user's foot is performed based on the scan data acquired in step S110. Here, homology model data is generated as a three-dimensional image of the shape of the user's foot.

In step S130, footwear or an insole that matches the shape of the user's foot is designed based on the homology model data generated in step S120. Here, 3D model data of the user's footwear or insole is generated, and further, information relating to the creator of the 3D model data is recorded. In addition, the system and software used, hardware and version information, and the like, may also be recorded. Note that the creator does not have to be recorded in a case where the 3D model data is automatically created. Furthermore, customer preferences, the usage application, custom design information, and the like, may also be recorded. In a case where an earlier 3D model data exists, the updated points may also be recorded. Also, for example, specification information relating to the product specifications, such as information relating to the shape or material, type, application, and last (shoe model) of the product, may also be recorded. Here, for example, the type may be information relating to one of an insole, shoe, or sandal. The application, for example, may be information relating to a specific sport or activity, such as running, walking, soccer, or tennis. The last, for example, may be information relating to the last on which the product design is based. More specifically, for example, the information may relate to whether or not the last of an existing product has been used, or whether or not a last fitted to the shape of the user's foot has been used.

In step S140, the footwear or insole is molded using a three-dimensional lamination method based on the 3D model data generated in step S130. Here, information relating to the molding date and time, material used, molding conditions, molding location, device serial number, and person in charge of molding, is recorded. The material used may include information relating to the material used to mold the footwear or insole using the three-dimensional lamination method, and, for example, includes information relating to the type, weight, and material lot of the material, and the like. The molding conditions may include information relating to the three-dimensional lamination method used to mold the footwear or insole (molding device), the manufacturing lot, and the like.

In step S150, post-processing is performed with respect to the footwear or insole molded in step S140. The post-processing may include, for example, releasing the footwear or insole molded in step S140 from a platform, washing away excess resin, performing secondary curing (post-curing), releasing a support material, polishing, and coating. Here, information relating to the date and time the post-processing was carried out, processing time, processing conditions, and person in charge of the processing is recorded. The processing conditions include, for example, the device, tools, heating temperature and time, and coating material used in the post-processing, or information relating to the environment and product state obtained during manufacturing.

In step S160, a quality check is performed with respect to the footwear or insole subjected to post-processing in step S150. Here, information relating to the date and time the quality check was carried out, person in charge, quality inspection result, weight, and information relating to other product characteristics are recorded.

The information recorded in steps S130, S140, S150, and S160 may be information that is automatically acquired from the device carrying out the processing, or may be information that is input by an operator.

In step S170, the footwear or insole subjected to the quality check in step S160 is shipped. Here, the shipping date and time are recorded.

In step S180, the footwear or insole shipped in step S170 is received, for example, by a purchaser. Here, the received date and time are recorded.

In step S190, the footwear or insole received in step S180 is used by the user. Here, a usage start date and time of the footwear or insole by the user, a usage history date and time, and a usage end date and time are recorded. The usage start date and time and the usage end date and time may, for example, be input by the user via a dedicated application installed to a smartphone, or may be acquired and recorded by another means. The usage history date and time is the history of using customer service and the like, and may be input together with the content by customer service, or the user. Note that the usage content, for example, may be information relating to a usage status, which has an effect on changes in the product due to use. For example, the information relating to the usage frequency, usage time, usage intensity, usage distance of the product by the user, and the status of the road surface during use (for example, concrete, dirt, grass, or tartan), is included. In terms of the usage time, for example, the usage start date and time, the usage history date and time, and the usage end date and time are recorded. The usage start date and time and the usage end date and time may, for example, be input by the user via a dedicated application installed to a smartphone, or may be acquired and recorded by another means. The usage history date and time is the history of using customer service and the like, and may be input together with the content by customer service, or the user. In a case where the product is a shoe or an insole, the usage content includes, for example, information relating to the frequency, time, and intensity of the walking or running.

In step S200, the footwear or insole used in step S 190 is disposed by the user. Here, the disposal date and time of the footwear or insole by the user is recorded. The disposal date and time may, in a similar manner to that described above, be input by the user, or may be acquired and recorded by another means.

As described above, the information and data that is generated, acquired, and recorded in the series of processing is managed by being associated with identification information (control number) corresponding to the footwear main body 110 or insole main body 210 of the user. That is, information including the customer information and manufacturing information (manufacturing process information) relating to the footwear main body 110 or insole main body 210 is collectively managed by the identification information (control number). Here, traceability, which enables information relating to the footwear main body 110 or insole main body 210 to be tracked based on the identification information (control number), is ensured.

The identification information (control number) is included on the label 120 (label 220) that is molded with the footwear main body 110 (insole main body 210). Therefore, the possibility of a discrepancy occurring in associating the identification information (control number) with the footwear main body 110 (insole main body 210) is extremely low. For example, the user and manufacturer are able to easily confirm, based on the identification information (control number), the customer information and manufacturing information (manufacturing process information) described above that relates to the footwear main body 110 (insole main body 210) corresponding to the identification information (control number).

The identification information (control number) may be assigned, for example, when the 3D model data is generated in step S130. Furthermore, the identification information (control number) may be assigned in step S110 or S120 before the label 120 (label 220) is molded. If the identification information (control number) is assigned in step S110, because the product and the customer can be associated with each other, it is possible to associate the type of foot shape of each person with the type of model that was selected. If the identification information (control number) is assigned in step S120, because the model is created from the foot shape at this time, it can be grasped in step S130 why the model has been selected. If the identification information (control number) is assigned in step S130, the manufactured model is associated with the product.

The identification information (control number) is constituted by, for example, numbers and symbols, and may be recorded in a database such that the information and data are associated with each other. Furthermore, the identification information (control number) is not limited to being constituted by numbers and symbols. For example, it is possible to use braille, a barcode, or a unique shape that follows an arbitrary rule. In addition, the identification information may be constituted not only by the control number, but also by the size of the actual footwear or insole, the user's name, and the like. Also, the identification information (control number) may hold, for example, the evaluation results of an environmental index obtained using an environmental impact evaluation system. The environmental index may be obtained based on, for example, at least one or more of carbon dioxide emissions, impact on land and soil, fossil fuel usage, usage of minerals and metals, water usage, impact on freshwater ecosystems, nutrient discharge into freshwater systems, impact on acidification, nutrient discharge into oceanic systems, nutrient discharge into terrestrial ecosystems, photochemical ozone emissions, impact on the respiratory system, radioactive substance emissions, carcinogen emissions, emissions of non-carcinogenic toxic substances and deleterious substances, and impact on ozone layer depletion.

### [Joining of Insole Main Body and Label]

Next, the joined section between the insole main body 210 and the label 220 will be described in detail using the insole main body 210 and the label 220 as an example. The insole main body 210 and the label 220 may be joined in a physically continuous state, or may be joined in a string-like form.

A physically continuous state is a state where a portion of the insole main body 210 and a portion of the label 220 are continuous, and are directly joined. That is, in such a configuration, the label 220 includes a joined portion, which is a section that is joined to the insole main body 210.

A state where the insole main body 210 and the label 220 are joined in a string-like form is a state where the joining is performed via a string-like joined portion that is thinner than the label 220. Specific examples will be described below.

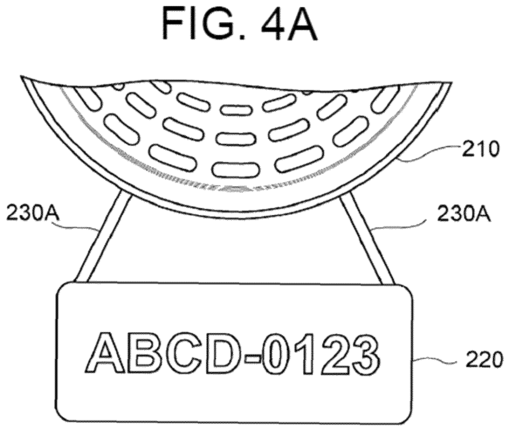

FIG. 4A is a diagram showing a state where the label 220 is connected to the insole main body 210 via a plurality of (two in this case) joined portions 230A. As shown in FIG. 4A, the two joined portions 230A are configured so as to each connect a heel section of the insole main body 210 to both end portions of the label 220. Although it is possible to join the insole main body 210 and the tag label 220 using a single joined portion, by arranging a plurality of joined portions 230A, for example, the possibility of the insole main body 210 and the tag label 220 becoming separated after molding and before delivery to the user is reduced. Note that two joined portions 230A are illustrated here as an example of a plurality of joined portions 230A. However, it is possible for three or more joined portions 230A to be used. In addition, the joined portions 230A do not have to be independent of each other. For example, the joined portion 230A may have a truss-like structure, a bifurcated structure, a three-dimensional mesh-like structure, or the like.

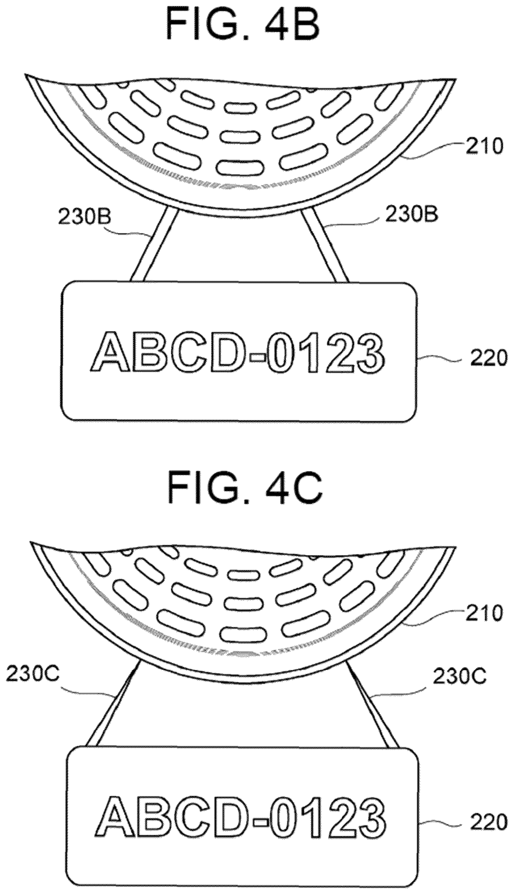

FIG. 4B is a diagram showing a state where the label 220 is connected to the insole main body 210 via two joined portions 230B. As shown in FIG. 4B, the two joined portions 230B are configured so as to each connect a heel section of the insole main body 210 to a side section of the label 220 that is closer to the center than both end portions. As a result of arranging the two joined portions 230B on a side section of the label 220 rather than at the end portions (corner portions), the possibility of the two joined portions 230B becoming detached at the connection sections with the label 220 is reduced.

FIG. 4C is a diagram showing a state where the label 220 is connected to the insole main body 210 via two joined portions 230C. As shown in FIG. 4C, the two joined portions 230C are configured so as to each connect a heel section of the insole main body 210 to both end portions of the label 220. Because the two joined portions 230C are formed thinner toward the heel section of the insole main body 210, when the label 220 is detached from the insole main body 210, it becomes easier to cut off the two joined portions 230C at the heel section of the insole main body 210, and further, it becomes less likely for traces of the cutting to remain on the insole main body 210 side, or the traces can be made smaller. That is, the original appearance and functionality of the insole main body 210 can be ensured.

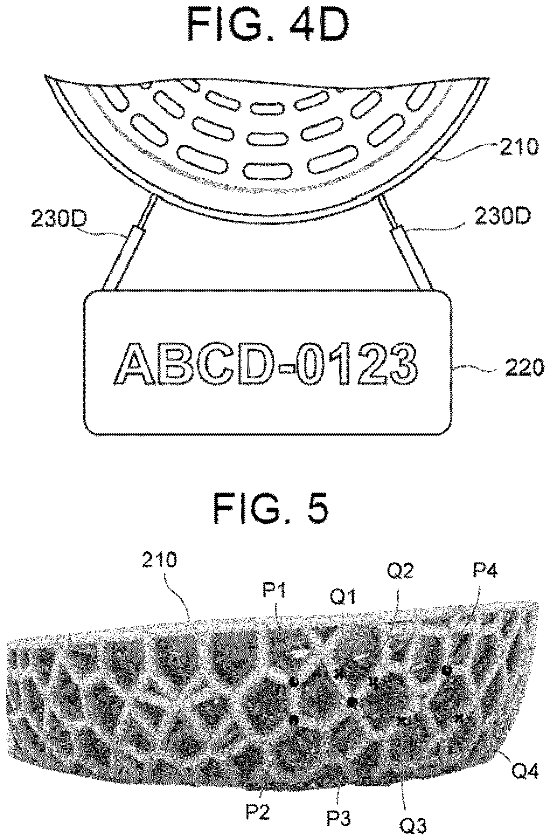

FIG. 4D is a diagram showing a state where the label 220 is connected to the insole main body 210 via two joined portions 230D. As shown in FIG. 4D, the two joined portions 230D are configured so as to each connect a heel section of the insole main body 210 to both end portions of the label 220. Because the two joined portions 230D are formed thinner than the average of the joined portions 230D near the insole main body 210, when the label 220 is detached from the insole main body 210, it becomes easier to cut off the two joined portions 230D at the heel section of the insole main body 210, and further, it becomes less likely for traces of the cutting to remain on the insole main body 210 side, or the traces can be made smaller. That is, the original appearance and functionality of the insole main body 210 can be ensured. Furthermore, because the two joined portions 230D are formed thinner than the average of the joined portions 230D near the insole main body 210, the molding is easier than that of the two joined portions 230C that become gradually thinner as described above, and the joining angle can be more easily adjusted.

The joined portions 230A to 230D shown in FIGS. 4A to 4D are preferably molded using the same material as that of the insole main body 210. Even when traces of the joined portions 230A to 230D that have been cut off from the insole main body 210 remain on the insole main body 210, the effect on the original appearance and functionality of the insole main body 210 can be reduced.

Note that the joined portions 230A to 230D are not limited to being formed using the same material as that of the insole main body 210, and may be molded, for example, using a different material as long as it is unlikely for traces of the cutting to remain on the insole main body 210 side, or the traces can be made smaller.

In addition, the label 220 is preferably molded using the same material as that of the insole main body 210. When using a three-dimensional lamination method, it becomes easier to simultaneously mold the label 220 with the insole main body 210. Further, in a case such as that described below where the label 220 is stored in the insole main body 210, the label 220 blends in with the insole main body 210, and a sense of awkwardness can be reduced.

On the other hand, the label 220 is not limited to being formed using the same material as the insole main body 210. For example, in a case where the label 220 can be appropriately stored in the insole main body 210, or the label 220 is managed without being stored in the insole main body 210, the label 220 may be molded using a different material.

In addition, the label 220 (joined portions 230A to 230D) may be molded in the same color as the insole main body 210, or molded in a different color, if it is possible to reduce the sense of awkwardness in a case where the label 220 is stored in the insole main body 210 as described below.

FIG. 5 is a diagram for describing the position in which the joined portion 230 is arranged on the insole main body 210. As shown in FIG. 5, in the insole main body 210 configured with a lattice structure, there are positions that are intersections of the lattice structure (for example, points P1 to P4) and positions on the struts of the lattice structure (for example, points Q1 to Q4).

For example, the connection point on the insole main body 210 with the joined portions 230A to 230D shown in FIGS. 4A to 4D may be at a position on a strut of the lattice structure, which is a position that is not an intersections of the lattice structure (for example, points Q1 to Q4), and is preferably at a position that is an intersection of the lattice structure constituting the insole main body 210 (for example, points P1 to P4). If the connection point is a position that is an intersection of the lattice structure constituting the insole main body 210 (for example, points P1 to P4), the likelihood of the strut becoming detached when the joined portions 230A to 230D are cut off from the insole main body 210 can be reduced.

Note that the joined portions 230A to 230D shown in FIGS. 4A to 4D preferably prevent unintended detachment, while also being easily cut off when the label 220 (including the joined portions 230A to 230D) is detached from the insole main body 210, and the thickness may be, for example, a diameter of 1 mm or more.

The joined portions 230A to 230D shown in FIGS. 4A to 4D may be, for example, formed in a cylindrical shape or a prismatic shape, but are not limited to a particular shape. For example, the cross-sectional shape may be configured to be different depending on the insole main body 210.

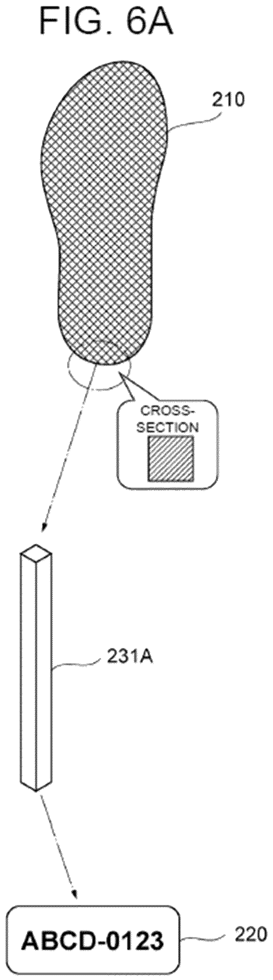

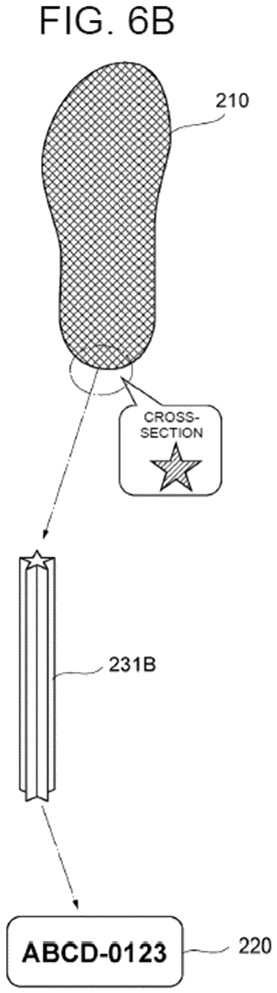

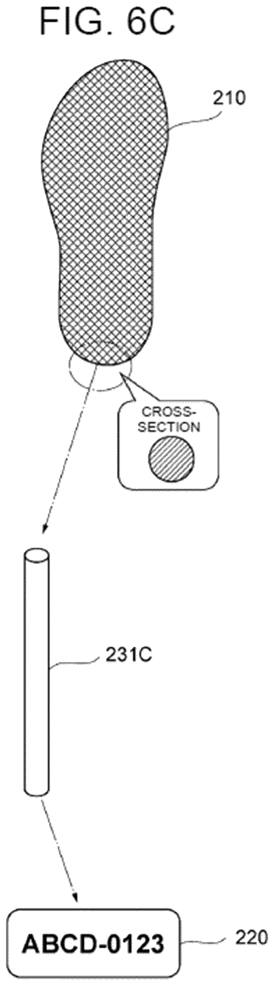

FIG. 6A is a diagram showing a joined portion 231A in which a cross-sectional shape is a square shape. FIG. 6B is a diagram showing a joined portion 231B in which a cross-sectional shape is a star shape. FIG. 6C is a diagram showing a joined portion 231C in which a cross-sectional shape is a circle shape.

For example, the joined portion 231A, in which the cross-sectional shape is a square shape as shown in FIG. 6A, is used when the insole main body 210 is for walking. Further, the joined portion 231B, in which the cross-sectional shape is a star shape as shown in FIG. 6B, is used when the insole main body 210 is for running. Also, the joined portion 231C, in which the cross-sectional shape is a circle shape as shown in FIG. 6C, is used when the insole main body 210 is for tennis.

As mentioned above, the label 220 is managed after being cut off from the insole main body 210. Here, in the joined portions 231A to 231C shown in FIGS. 6A to 6C, the trace on the insole main body 210 side after the label 220 is cut off from the insole main body 210 will be different in each case. That is, after the label 220 is cut off from the insole main body 210, the combination of the insole main body 210 and the label 220 can be easily determined.

Specifically, when the user owns a plurality of insole main bodies 210, the combinations of the plurality of insole main bodies 210 and the label 220 cut off from each insole main body 210 can be easily determined.

In terms of the (cross-sectional) shape of the joined portion 230, for example, the shape may be specified or selected when the user orders the insole 200, or may be set as appropriate on the manufacturer side. Based on the customer information and history information, such as the manufacturing information, in a case where the order is from the same user, the joined portion 230 may be manufactured such that the joined portion 230 has a different (cross-sectional) shape to that of the insole 200 manufactured previously.

### [Storage of Label]

Next, the management of the label 220 that has been cut off from insole main body 210 will be described. The identification information for identifying the insole main body 210 includes the label 220, which is molded with the insole main body 210. Therefore, it is important that the label 220 that has been cut off from the insole main body 210 is appropriately managed.

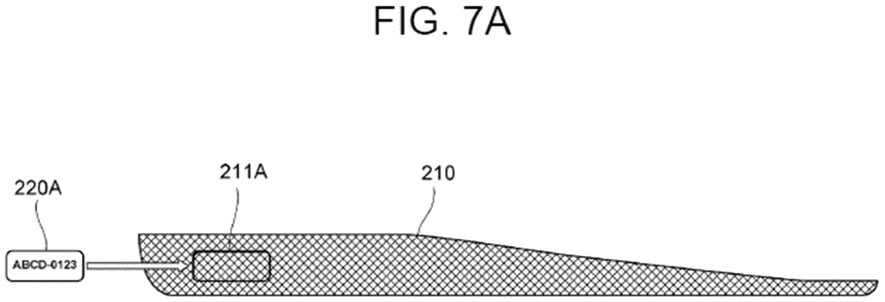

FIG. 7A is a diagram showing a state where a label 220A is stored in the insole main body 210 according to an embodiment of the present disclosure. As shown in FIG. 7A, the insole main body 210 includes a storage area 211A, and the label 220A is stored in the storage area 211A.

Specifically, the storage area 211A is formed by a concave portion in the surface of the insole main body 210 so as to correspond to the shape of the label 220A. The label 220A that has been detached from the insole main body 210 is stored in the storage area 211A of the insole main body 210 so as to be fitted to the concave portion.

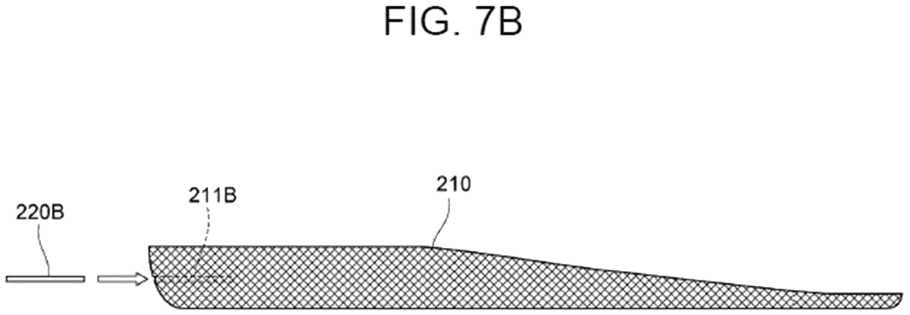

FIG. 7B is a diagram showing a state where a label 220B is stored in the insole main body 210 according to an embodiment of the present disclosure. As shown in FIG. 7B, the insole main body 210 includes a storage area 211B, and the label 220B is stored in the storage area 211B.

Specifically, the storage area 211B is formed by a concave portion in the surface of the insole main body 210 so as to correspond to the shape of the label 220B. The label 220B that has been detached from the insole main body 210 is stored in the storage area 211B of the insole main body 210 so as to be inserted into to the concave portion.

In this way, by storing the labels 220A and 220B that have been cut off from the insole main body 210 in the storage areas 211A and 211B provided in the insole main body 210, it is possible to prevent the labels 220A and 220B from being lost, while also appropriately managing the labels 220A and 220B corresponding to the insole main body 210.

Note that the position of the storage area that stores the label 220 in the insole main body 210 is not limited to a thick section in the side surface of the insole main body 210 shown in FIG. 7A (storage area 211A) and a thick section in the heel of the insole main body 210 shown in FIG. 7B (storage area 211B). Furthermore, as shown in FIG. 7A, in a case where the label 220A is stored in the storage area 211A in a thick section of the side surface of the insole main body 210, the insole main body 210 may be used in a state where the label 220A is stored, or the insole main body 210 may be used in a state where the label 220A is not stored. For example, in a case where the insole main body 210 is used in a state where the label 220A is stored, it is preferable that displacement or detachment do not occur by using a surface fastener and engagement between the uneven shapes of the storage area 211A and the label 220A.

Because the insole main body 210 is used by being placed inside footwear, the insole main body 210 is used while in close contact with the sole of the user's foot and the footwear, and the possibility of abrasive wearing due the ground surface, or wearing due to contact by other external surfaces, is low. That is, for example, the insole main body 210 may be provided with the storage area that stores the label 220 in an upper surface (the contact surface with the sole of the user's foot), and a bottom surface (the contact surface with the inside of the footwear).

However, it is preferable that the surface of the insole main body 210 in which the label 220 is stored in the storage area is a flush surface. As a result, the insole main body 210 in which the label 220 has been stored in the storage area becomes stable when placed inside the footwear, and the possibility that the user experiences discomfort when wearing the footwear can be reduced. As a result, the original functions of the insole main body 210 can be ensured without being impaired.

Moreover, in a case where a storage area is provided in the footwear main body 110 shown in FIG. 1, for example, if the storage area is provided in the bottom surface of the footwear main body 110, the label 120 that has been stored in the storage area is subjected to abrasive wearing due to the ground surface. In addition, when the storage area is provided in an outer surface of the footwear main body 110, which corresponds to the top of the foot, there is a possibility that the label 120 that has been stored in the storage area will be subjected to wearing due to contact from the outside. As a result, there is a possibility that the identification information formed on the label 120 will be damaged or lost, and no longer be capable of being identified.

Further, if the storage area is provided in a position of the footwear main body 110 that stands out in terms of the appearance, the label 120 that has been stored in the storage area will stand out. As a result, the original appearance of the footwear main body 110 may be impaired. Also, if the identification information formed on the label 120 stands out, this may lead to leaking of personal information and the like.

Therefore, in a case where the storage area is provided in the footwear main body 110, the position of the storage area is preferably a thick section of the side surface or a thick section of the heel of the footwear main body 110, or an inner surface of the footwear main body 110 (such as a contact surface with the top of the user's foot, a contact surface with the user's heel, and a contact surface with the sole of the user's foot). However, in order to reduce the discomfort experienced by the user when the footwear main body 110 is worn, the inner surface of the footwear main body 110, in which the label 120 has been stored in the storage area, is preferably a flush surface.

Furthermore, in a case where the storage area is provided on the outer surface of the footwear main body 110 (including the thick section of the side surface and the thick section of the heel), it is preferable to at least avoid the bottom surface and the like, in which abrasion of the label 120 would occur, while also adopting a position and method that would not cause the appearance of the footwear main body 110 to be impaired. Specifically, the label 120 that has been stored in the storage area may be formed such that the area that is exposed from the outer surface is small, or formed such that the color, pattern, and the like, of the label 120 that is exposed from the outer surface matches the color and pattern of the footwear main body 110.

In addition, the storage area provided in the footwear main body 110 (insole main body 210) may have a structure such as a pocket that is capable of storing the label 120 (220).

Note that the footwear 100 (insole 200) is delivered to the user in a state where the label 120 (220) is joined to the footwear main body 110 (insole main body 210), and then the label 120 (220) is detached from the footwear main body 110 (insole main body 210) by the user. Then, although it is assumed that the user manages the label 120 (220), the present disclosure is not limited to this.

For example, prior to shipping the footwear 100 (insole 200), the label 120 (220) may be detached from the footwear main body 110 (insole main body 210) on the manufacturer side, and the label 120 (220) may be stored on the manufacturer side. In this case, the same identification information which is included on the label 120 (220), or information corresponding to the identification information, may be provided on the footwear main body 110 (insole main body 210) of the footwear 100 (insole 200) that is shipped.

### [Configuration of Label]

Next, the configuration of a label will be described using the example of the label 220, which is simultaneously molded with the insole main body 210, as an example.

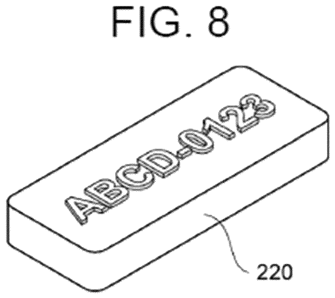

FIG. 8 is a diagram showing an example of the label 220 having a solid surface. As shown in FIG. 8, identification information is formed on one surface of the quadrangular plate-shaped label 220. Note that the surface on which the identification information is formed is not limited to a single surface of the label 220, and the identification information may be formed on two or more surfaces.

The identification information may be configured by using a convex shape, or configured using a concave shape on the solid surface. In a case where the identification information is constituted by text, symbols, and the like using a convex shape or concave shape, from the viewpoint of readability when viewed with the naked eye, it is preferable that the step between the identification information section represented by the text, symbols, and the like, and the base section that serves as a base is, for example, 0.4 mm or more. However, the step may be smaller than this when the reading is performed by a sensor. Furthermore, for example, the size of the text is preferably at least 1 square mm or more per character in consideration of the visibility for the naked eye. However, the text may be smaller than this when the reading is performed by a sensor.

In addition, when a curved surface is formed on the solid surface, the curved surface may be given a thickness in the normal direction. This makes it easier to ensure moldability, and in a case where the identification information, such as text and symbols, is configured using convex shapes and concave shapes on the curved surface, the readability can be improved by forming the identification information in the normal direction with respect to the curved surface.

Also, the label 220 may be constituted by identification information, such as text and symbols, using hole shapes (punching) that penetrate one of the surfaces of the quadrangular plate-shaped label 220 through to the surface on the opposite side.

In addition, the identification information on the solid surface is not limited to being molded and formed in convex shapes, concave shapes, and hole shapes when the label 220 is molded. For example, the identification information may be formed by being printed on the solid surface after the label 220 is molded. The printing method is not particularly limited. For example, laser engraving, inkjet printing, heat transfer printing, pad printing, black light, embossing, and cutting may be used.

Note that the shape of the label 220 is not limited to a quadrangular plate shape. For example, a circular, elliptical, oval, or other polygonal plate shape may be used.

Furthermore, the dimensions of the label 220 (the section on which the identification information is formed) is not an excessively large size from the viewpoint of the usage amount of the material and the molding area. In addition, it is necessary for the size to not be excessively small, such that the necessary information can be sufficiently written thereon. In consideration of the label 220 described above being stored in the storage area of the insole main body 210, the label 220 is smaller than the insole main body 210, and may have, for example, a length of about 10 to 200 mm, a width of about 5 to 50 mm, and a thickness of about 2 to 50 mm, and more preferably have a length of about 30 to 70 mm, a width of about 10 to 30 mm, and a thickness of about 5 to 15 mm.

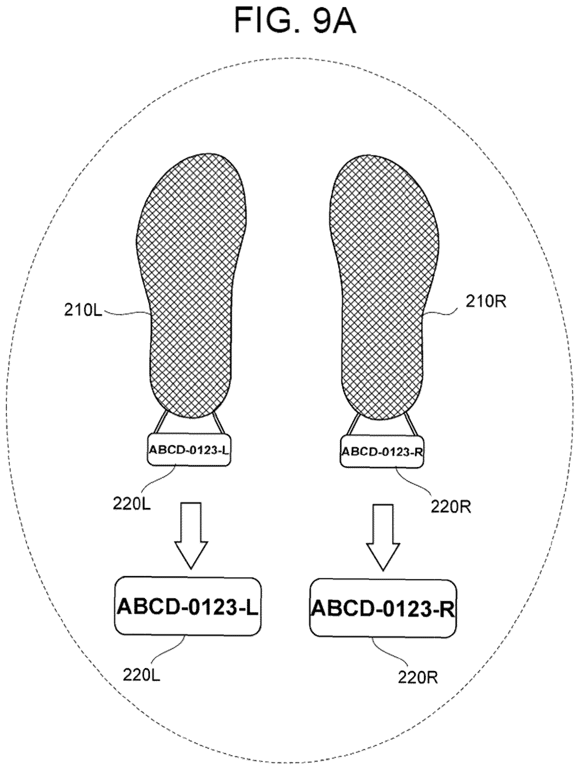

FIG. 9A is a diagram showing an example in which labels 220L and 220R are provided that each correspond to left and right insole main bodies 210L and 210R. As shown in FIG. 9A, the left foot label 220L is joined to the left foot insole main body 210L, and the right foot label 220R is joined to the right foot insole main body 210R.

Although the user's right and left feet will naturally have different foot shapes, the shapes will not necessarily be symmetrical. For example, the feet may have different sizes (length and width), correspond to applications in different sports, and may also have characteristics that depend on the way of walking in some cases. If the insole 200 is made-to-order, the left and right insole main bodies 210L and 210R are even more likely to be manufactured to match each of the left and right feet. That is, for such a user, individual identification information may be provided for each of the left and right insole main bodies 210L and 210R.

Furthermore, a single piece of identification information may be provided such that the left and right insole main bodies 210L and 210R are managed as a single pair.

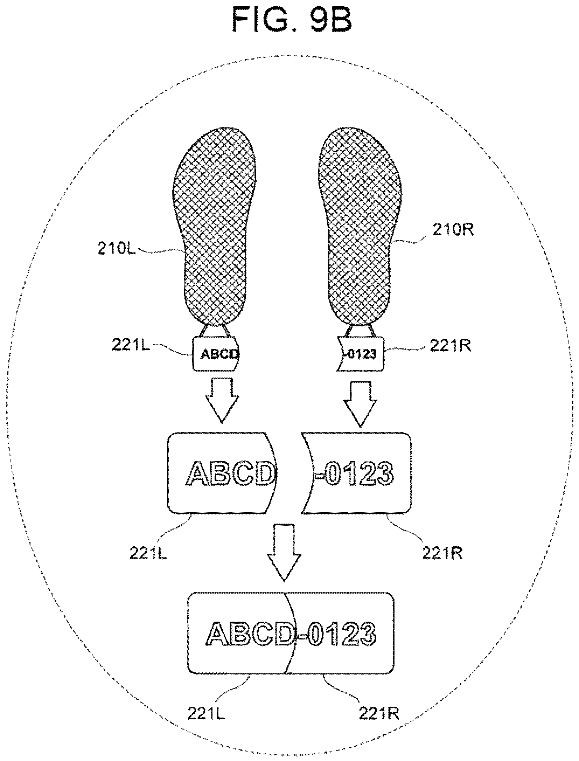

FIG. 9B is a diagram showing an example in which labels 221L and 221R are provided that each correspond to the left and right insole main bodies 210L and 210R. As shown in FIG. 9B, the left foot label 221L is joined to the left foot insole main body 210L, and the right foot label 221R is joined to the right foot insole main body 210R.

As mentioned above, the left and right insole main bodies 210L and 210R are manufactured to match each of the left and right feet. Further, after detaching the labels 221L and 221R that are joined to each of the left and right insole main bodies 210L and 210R, a single piece of identification information may be formed by combining the label 221L and the label 221R. That is, the label 221L and the label 221R are formed as a pair. Here, as the pair, as shown in FIG. 9B, the label 221L and the label 221R may be combined to form a single piece of identification information due to a matching of the shape of the joined section, or a single piece of identification information may be formed due to a matching of the color, pattern, or the like, of the joined section. In addition, a single piece of identification information may be formed by an abstract association based on the contents written on each of the label 221L and the label 221R.

### [Method of Manufacturing Footwear (Insole)]

Next, a method of manufacturing footwear for manufacturing, using a three-dimensional lamination method, a footwear main body, and a label that is molded with the footwear main body using the material with which the footwear main body is molded, will be described. Here, the insole main body 210 and the label 220 will be described in detail as an example.

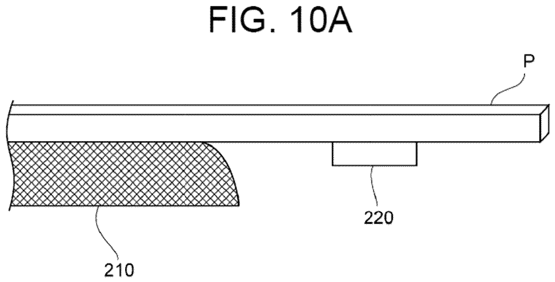

FIG. 10A is a diagram showing the positional relationship between the insole main body 210 and the label 220, which are molded as a result of being laminated on a platform P. As shown in FIG. 10A, the bottom surface of the insole main body 210 and the bottom surface of the label 220 are molded at the same height.

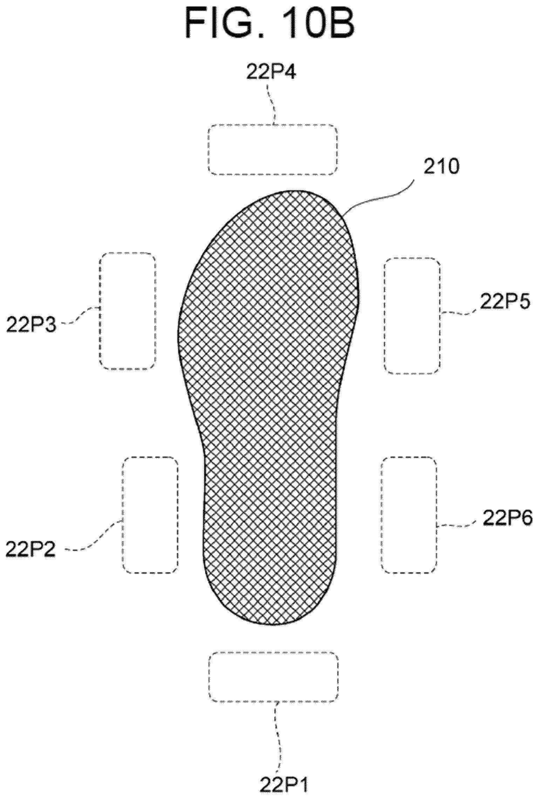

FIG. 10B is a plan view showing the positional relationship between the molded insole main body 210 and the label 220. As shown in FIG. 10B, the insole main body 210 and the label 220 may be separately molded as separate parts. Further, the label 220 may be molded, for example, to any one of positions 22P1 to 22P6 around the insole main body 210.

In this way, the position in which the label 220 is molded is not particularly limited. However, in a case where the molding is performed in a state where the insole main body 210 and the label 220 are joined via the joined portion 230, the insole main body 210 and the label 220 are preferably molded close to each other. For example, if one end of the joined portion 230 is arranged on the heel of the insole main body 210, and the other end of the joined portion 230 is connected to the label 220, the label 220 is preferably molded near the heel of the insole main body 210 (position 22P1). As a result, the material used to form the joined portion 230 is reduced, while also avoiding an increase in complexity in the shape of the joined portion 230.

Furthermore, the label 220 may be separately manufactured to the insole main body 210 by utilizing, for example, a support portion or the like that is added to the model at the time of molding. The support portion is necessary depending on the structure of the molded product, and is sometimes attached to the outside of a molded article for stable moldability. The support portion is detached from the final product, and is discarded in many cases. This allows for the effective use of materials that would normally be discarded.

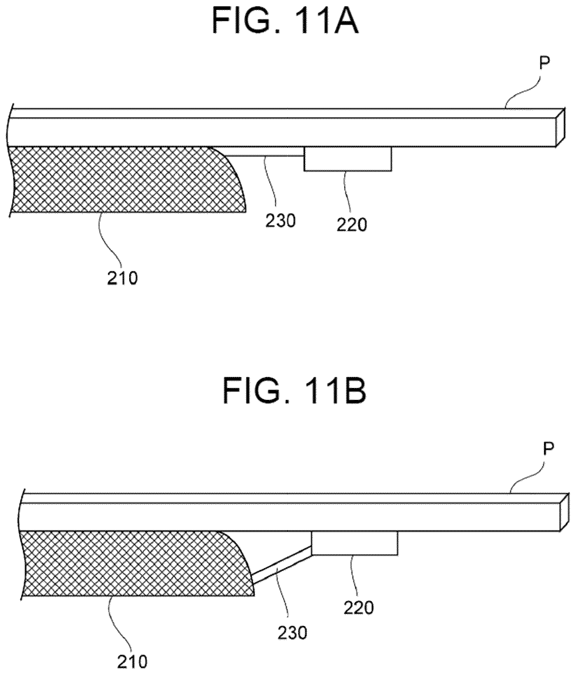

FIG. 11A is a diagram showing, in relation to the joined portion 230 that joins the insole main body 210 and the label 220, the position at which the joined portion 230 is molded on the platform P. As shown in FIG. 11A, the joined portion 230 is molded at the same height as the bottom surface of the insole main body 210 and the bottom surface of the label 220. As a result, the joined portion 230 has a short distance between the insole main body 210 and the label 220, which reduces the amount of material, while also being stably molded.

FIG. 11B is a diagram showing, in relation to the joined portion 230 that joins the insole main body 210 and the label 220, the position at which the joined portion 230 is molded, at an angle with the platform P. As shown in FIG. 11B, the joined portion 230 does not make contact with the platform P, and is molded with a separation.

In a case where the joined portion 230 is molded with a separation from the platform P, the connection position between the joined portion 230 and the insole main body 210 and the connection position between the joined portion 230 and the label 220 have different distances from the platform P. That is, the joined portion 230 is not parallel to the platform P, and is molded at an angle. The angle is preferably 30 degrees or more in order to ensure moldability.

As a result, the joined portion 230 does not need to be released from the platform P, and the entire insole 200 (the insole main body 210, the label 220, and the joined portion 230) has a structure that is easily released from the platform P.

In addition, the label 220 may also have a structure that is easily released from the platform P.

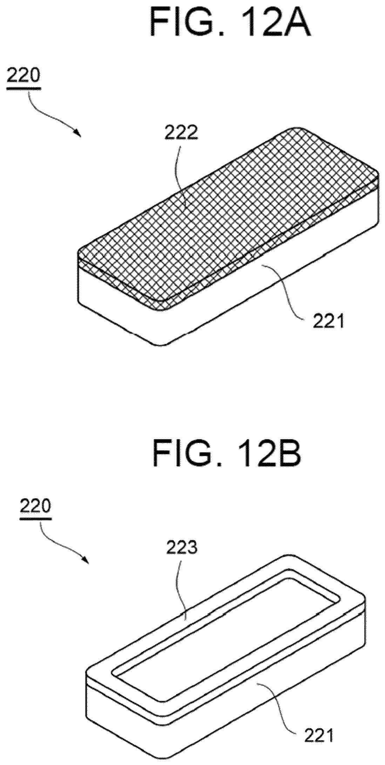

FIG. 12A is a diagram showing the label 220, which is formed of a solid 221 and a lattice structure 222. As shown in FIG. 12A, the label 220 includes the lattice structure 222. For example, as a result of the label 220 being molded such that the surface having the lattice structure 222 is in contact with the platform P, the contact area between the label 220 and the platform P can be reduced. As a result, the label 220 can be more easily released from the platform P.

Further, the label 220 (the solid 221 and the lattice structure 222) may be simultaneously molded with the insole main body 210 using the same material and structure. As a result, for example, the label 220, when stored in the storage areas 211A and 211B of the insole main body 210, can blend in without impairing the appearance of the insole main body 210.

Moreover, as a test of the insole main body 210, it is possible to use the label 220 (the solid 221 and the lattice structure 222) that has been molded with the insole main body 210 using the same material. For example, the solid 221 can be used to test for discoloration, and in durability testing and mechanical characteristics testing, and the like. Further, the lattice structure 222 can be used for tack evaluation, compression testing, and the like.

FIG. 12B is a diagram showing the label 220, which is formed of a solid 221 and a hollow structure 223.

As shown in FIG. 12B, the label 220 includes the hollow structure 223. For example, as a result of the label 220 being molded such that the surface having the hollow structure 223 is in contact with the platform P, the contact area between the label 220 and the platform P can be reduced. As a result, the label 220 can be more easily released from the platform P.

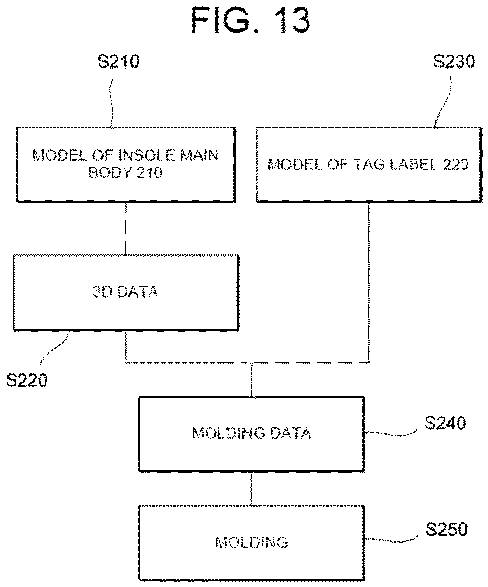

FIG. 13 is a diagram showing an example of a sequence by which the insole 200 is molded by combining a model of the insole main body 210 and a model of the label 220 (including identification information). As shown in FIG. 13, the method performs the steps of acquiring a model of the insole main body 210 (step S210); retaining the model of the insole main body 210 as 3D data (step S220); and acquiring a model of the label 220, which has been provided with identification information (step S230). Then, based on these steps, the method performs the steps of generating molding data of the insole 200 (step S240); and molding the insole 200 based on the molding data (step S250) are performed.

As a result, it is not necessary to generate a model of the insole main body 210 each time. For example, in a case where the model of the insole main body 210 is repeatedly used, manufacturing can be efficiently performed in a case where a plurality of the same insole main bodies 210 are manufactured.

### [Effects of Embodiment]

According to the footwear 100 (insole 200) and the method of manufacturing footwear (method of manufacturing an insole) of the embodiment of the present disclosure, the label 120 (label 220) is simultaneously molded with the footwear main body 110 (insole main body 210) using a three-dimensional lamination method. Because the insole main body 210 and the label 220 are molded so as to be joined via the joined portion 230, and the label 220 includes the identification information, the possibility of a discrepancy occurring in matching the identification information (control number) with the insole main body 210 is extremely low. Because the label 220 is detached from the insole main body 210, and then appropriately stored in the storage areas 211A and 211B provided in the insole main body 210, the original appearance and functionality of the insole main body 210 is ensured, while also enabling management without loss of the label 220.

Note that, in the present embodiment, the insole main body 210 and the label 220 are joined by directly adhering the joined portion 230 to the insole main body 210 and the label 220. However, the present disclosure is not limited to this.

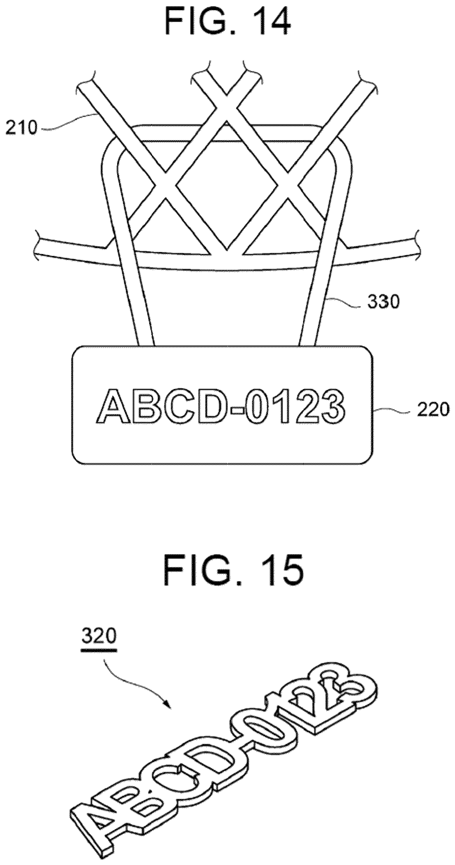

FIG. 14 is a diagram showing a state where the label 220 is connected to the insole main body 210 by a loop-shaped joined portion 330. As shown in FIG. 14, the loop-shaped joined portion 330 is not directly adhered to the insole main body 210, and is configured so as to connect to the insole main body 210 and both end portions of the label 220 by being passed through gaps in the member constituting the insole main body 210 (for example, the gaps between the struts of the lattice structure). That is, the loop-shaped joined portion 330 is formed extending from a predetermined location on the label 220, passes through gaps in the member constituting the insole main body 210, and returns to the label 220 to form a loop. Because the loop of the loop-shaped joined portion 330 is cut when the label 220 is cut off from the insole main body 210, traces of the cut do not remain on the insole main body side 210. That is, the original appearance and functionality of the insole main body 210 can be ensured.

Furthermore, in the present embodiment, the label 220 has the solid surface, and is formed including the identification information on the solid surface. However, the present disclosure is not limited to this.

FIG. 15 is a diagram showing an example in which a label 320 is formed by the shape of the identification information itself. As shown in FIG. 15, the label 320 does not have a solid surface, and is formed by shape of the text, numbers, and symbols constituting the identification information itself. In this case, a single label 320 (identification information) may be formed by joining adjacent text, numbers, and symbols.

Note that, in the present embodiment, footwear, such as a shoe, and an insole that is used by being placed inside footwear, has been described as an example of the body wear article according to the present disclosure. However, the present disclosure is not limited to this.

The present disclosure can be applied, for example, to body wear articles including clothing (such as clothes, socks, and hats), jewelry, and other products that are utilized by being directly or indirectly fitted along a portion of the body (such as rings, glasses, goggles, earrings, headphones, and earphones).

Furthermore, in the present embodiment, an example of using a three-dimensional lamination method to manufacture the footwear and insole has been described. However, the present disclosure is not limited to this, and other manufacturing methods may be used.

### [Summary of Effects of Present Disclosure]

According to the present disclosure, in the body wear article, which is used by being fitted along a portion of the body, because the information label is simultaneously molded with the main body, has the joined portion that is joined to the main body, and further includes identification information that identifies the main body, it is possible to ensure the original appearance and functionality body wear article, while also enabling appropriate management to be performed using the identification information.

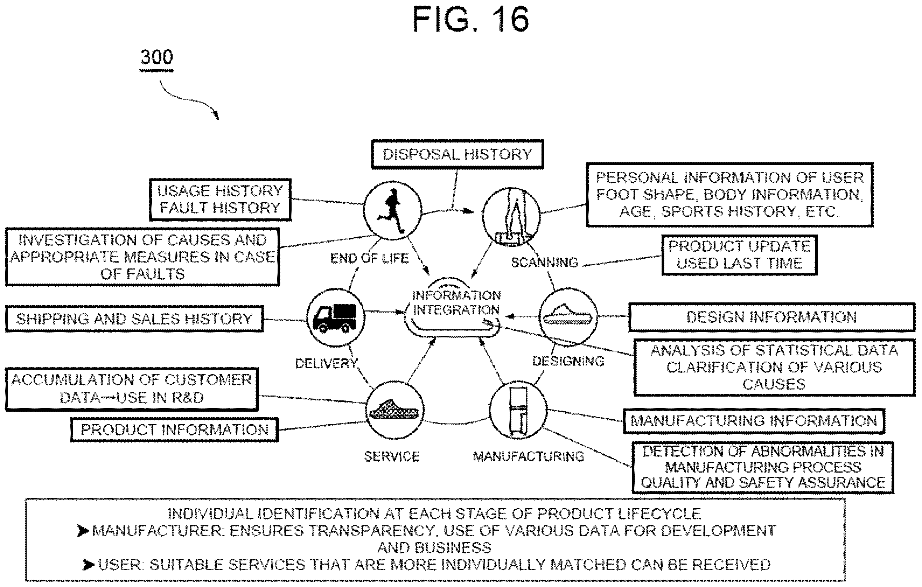

FIG. 16 is a diagram showing an overview of a product management system 300. The product management system 300 is capable of performing management by integrating information relating to manufacturing, sales, use, repair, and the like. As a result, the manufacturer is capable of ensuring the transparency of processes, and using various data for development and business creation. Furthermore, users can receive more personalized services relating to product purchasing, after-sales services, and the like.

Furthermore, according to the product management system 300 of an embodiment of the present disclosure, because the manufacturer of the product and the like can be managed, for example, it is possible to take measures against counterfeit products through identification of counterfeit products and the like. For example, the administrator of the product management system 300 is capable of identifying, as a counterfeit product, a product that does not have identification information that is assigned to a genuine product, a product having different identification information to that of a genuine product, or a product that cannot be associated with product management information that manages a genuine product.

### [Aspects]

(1) A body wear article according to an aspect of the present disclosure is utilized by being fitted along a portion of a body, and includes: a main body; and an information label that is manufactured during manufacturing of the main body, the information label including identification information that identifies the main body and a joined portion that is joined to the main body.
   According to the body wear article described in (1) above, because the information label is manufactured during manufacturing of the main body, includes the joined portion that is joined to the main body, and further includes identification information that identifies the main body, it is possible to ensure the original appearance and functionality of the body wear article, while also enabling appropriate management using the identification information.
(2) The body wear article described in (1) above may be configured such that the information label can be detached from the main body.
   According to the body wear article described in (2) above, the original appearance and functionality of the body wear article are not impaired due to the information label when the main body is used. As a result, the original appearance and functionality of the body wear article can be appropriately ensured.
(3) The body wear article described in (1) or (2) above may be configured such that the main body includes a storage area configured to store the information label, the storage area includes a concave portion extending into the main body and having a shape corresponding to a shape of the information label such that the storage area is configured to receive the information label.
   According to the body wear article described in (3) above, because the information label can be stored in the storage area of the main body, the original appearance and functionality of the body wear article can be ensured, while also enabling the information label to be managed without being lost. Furthermore, because the information label is configured so as to be fitted to a concave portion included in the storage area of the main body, the original appearance and functionality of the body wear article can be more appropriately ensured, while also enabling the information label to be managed without being lost.
(4) The body wear article described in any one of (1) to (3) above may be configured such that at least a portion of the body wear article is a footwear or insole that is manufactured by additive manufacturing, the information label has a right foot information label that corresponds to a right foot main body and a left foot information label that corresponds to a left foot main body, of a footwear main body of the footwear or an insole main body of the insole, and the right foot information label and the left foot information label are formed as a pair.
   According to the body wear article described in (4) above, because the right foot information label and the left foot information label are formed as a pair, it is possible to perform appropriate management using a single piece of identification information as the identification information of a pair of footwear or insoles.
(5) The body wear article described in any one of (1) to (4) above may be configured such that the joined portion includes a state in which the main body and the information label are physically continuous, or a state in which the main body and the information label are joined in a string configuration.
   According to the body wear article described in (5) above, because the main body and the information label are joined by the joined portion, the possibility of a discrepancy occurring in the association between the identification information included on the information label and the main body is extremely low.
(6) The body wear article described in any one of (1) to (5) above may be configured such that the information label is connected via a loop-shaped so that the information label is out of direct contact with the main body.
   According to the body wear article described in (6) above, because the loop-shaped joined portion, which is not directly adhered to the main body, is cut when the information label is detached from the main body, traces of cutting the information label do not remain on the main body side, and it is possible to more appropriately ensure the original appearance and functionality of the body wear article.
(7) The body wear article described in any one of (1) to (6) above may be configured such that the main body has a corresponding portion that corresponds to the joined portion that is configured to cut off from the main body, and a cross-sectional shape of the corresponding portion from which the joined portion has been cut off is different from a cross-sectional shape of the corresponding portion of another body wear article.
   According to the body wear article described in (7) above, after the information label is cut off from the main body, the combination of the main body and the information label can be easily determined according to the cross-sectional shape of the corresponding portion of the main body that corresponds to the joined portion.
(8) The body wear article described in any one of (1) to (7) above may be configured such that the joined portion has a location near the main body that is thinner than an average thickness of the joined portion.
   According to the body wear article described in (8) above, because the joined portion has a location near the main body that is thinner than the average thickness of the joined portion, the joined portion is easier to cut off when the information label is detached from the main body, and further, it becomes less likely for traces of the cutting to remain on the main body side, or the traces can be made smaller. As a result, the original appearance and functionality of the body wear article can be ensured.
(9) The body wear article described in any one of (1) to (8) above may be configured such that the identification information includes at least one of text, numbers, symbols, braille, or a barcode.
   According to the body wear article described in (9) above, because the identification information includes at least one of text, numbers, symbols, braille, or a barcode, it is possible to provide identification information that enables appropriate identification of the main body.
(10) The body wear article described in any one of (1) to (9) above may be configured such that in a case where the identification information is on at least one solid surface of the information label, a printed shape of the identification information includes at least one of a convex shape, a concave shape, and a hole shape, and in a case where the information label does not have a solid surface, identification information includes connected elements configuring the identification information.
   According to the body wear article described in (10) above, because the identification information includes at least one of a convex shape, a concave shape, and a hole shape on at least one solid surface of the information label, the identification information can be appropriately recognized. Alternatively, in a case where the information display unit does not have a solid surface, because the identification information includes the connected elements configuring the identification information, it is possible to reduce the material used to manufacture the information label, while also allowing the identification information to be appropriately recognized.
(11) The body wear article described in any one of (1) to (10) above may be configured such that the identification information includes information and data that are generated, acquired, and recorded for the body wear article.
   According to the body wear article described in (11) above, information including the customer information and manufacturing information (manufacturing process information) relating to the main body is collectively managed by the identification information, and traceability, which enables information relating to the main body to be traced, can be ensured based on the identification information.
(12) A method of manufacturing footwear according to an aspect of the present disclosure is a method of manufacturing footwear including a three-dimensional lamination molded article, the method including: manufacturing, on a platform, a footwear main body and an information label having a joined portion that is joined to the footwear main body; wherein the manufacturing includes at least one of including identification information that identifies the footwear main body on the information label during the manufacturing of the information label, or performing printing or processing to include the identification information on the information label after the manufacturing of the information label.
   According to the method of manufacturing footwear described in (12) above, because the information label, which is manufactured during the manufacturing of the footwear main body, is manufactured to include identification information that identifies the footwear main body, and/or is printed or processed to include the identification information after the manufacturing of the information label, it is possible to manufacture the footwear such that the possibility of a discrepancy occurring in the association of the identification information and the footwear main body is extremely low.
(13) In the method of manufacturing footwear described in (12) above, the information label may be formed such that a surface area on a side that is generated on the platform is smaller than a surface area of the footwear main body.
   According to the method of manufacturing footwear described in (13) above, the information label is formed such that the surface area on the side that is generated on the platform is smaller than a surface area of the footwear main body. Therefore, the information label can be easily released from the platform.
(14) In the method of manufacturing footwear described in (12) or (13), a distance to the platform may be different at a connection position between the joined portion and the footwear main body, and a connection position between the joined portion and the information label.

According to the method of manufacturing footwear described in (14) above, the joined portion does not need to be released from the platform, and is manufactured at an angle to the platform. Therefore, the moldability can be ensured.

The embodiment described above is intended to facilitate understanding of the present disclosure, and is not intended to limit the present disclosure. The elements included in the embodiment, as well as the arrangement, materials, conditions, shapes, sizes, and the like, of the elements are not limited to those that have been illustrated, and can be modified as appropriate. Furthermore, the configurations described in different embodiments may be partially substituted or combined with each other.

### INDUSTRIAL APPLICABILITY

The present disclosure can be applied to a body wear article including footwear and an insole, which is manufactured using a three-dimensional lamination method, and is utilized by being fitted along a portion of the body, and a method of manufacturing the same.

## Claims

1. A body wear article utilized by being fitted along a portion of a body, comprising:
a main body; and
an information label that is manufactured during manufacturing of the main body, the information label including identification information that identifies the main body and a joined portion that is joined to the main body.

2. The body wear article according to claim 1, wherein
the information label is configured to detach from the main body.

3. The body wear article according to claim 1, wherein
the main body includes a storage area configured to store the information label, the storage area including a concave portion extending into the main body and having a shape corresponding to a shape of the information label such that the storage area is configured to receive the information label.

4. The body wear article according to claim 1, wherein
the main body is at least a portion of a right foot footwear or a left foot footwear, and
the identification information on the information label includes right foot information when the main body is the portion of the right foot footwear or left foot information when the main body is the portion of the left foot footwear.

5. The body wear article according to claim 4, further comprising:
an other main body; and
an other information label that is manufactured during manufacturing of the other main body, the other information label including other identification information that identifies the other main body and an other joined portion that is joined to the other main body.
wherein
the main body is at least the portion of the right foot footwear, and the identification information on the information label includes the right foot information, and
the other main body is at least the portion of the left foot footwear, and the other identification information on the other information label includes the left foot information.

6. The body wear article according to claim 1, wherein
the main body is at least a portion of a right foot three-dimensionally laminated insole or a left foot three-dimensionally laminated insole, and
the identification information on the information label includes right foot information when the main body is the portion of the right foot three-dimensionally laminated insole or left foot information when the main body is the portion of the left foot three-dimensionally laminated insole.

7. The body wear article according to claim 6, further comprising:
an other main body; and
an other information label that is manufactured during manufacturing of the other main body, the other information label including other identification information that identifies the other main body and an other joined portion that is joined to the other main body,
wherein
the main body is at least the portion of the right foot three-dimensionally laminated insole, and the identification information on the information label includes the right foot information, and
the other main body is at least the portion of the left foot three-dimensionally laminated insole, and the other identification information on the other information label includes the left foot information.

8. The body wear article according to claim 1, wherein
the joined portion includes a state in which the main body and the information label are physically continuous, or a state in which the main body and the information label are joined in a string configuration.

9. The body wear article according to claim 1, wherein
the information label is connected via a loop-shaped so that the information label is out of direct contact with the main body.

10. The body wear article according to claim 1, wherein
the main body has a corresponding portion that corresponds to the joined portion that is configured to be cut off from the main body, and
a cross-sectional shape of the corresponding portion from which the joined portion has been cut off is different from a cross-sectional shape of the corresponding portion of another body wear article.

11. The body wear article according to claim 1, wherein
the joined portion has a location near the main body that is thinner than an average thickness of the joined portion.

12. The body wear article according to claim 1, wherein
the identification information includes at least one of text, numbers, symbols, braille, or a barcode.

13. The body wear article according to claim 1, wherein
in a case where the identification information is on at least one solid surface of the information label, a printed shape of the identification information includes at least one of a convex shape, a concave shape, and a hole shape, and
in a case where the information label does not have a solid surface, identification information includes connected elements configuring the identification information.

14. The body wear article according to claim 1, wherein
the identification information includes information and data that are generated, acquired, and recorded for the body wear article.

15. A method of manufacturing footwear including a three-dimensional lamination molded article, the method comprising:
manufacturing, on a platform, a footwear main body and an information label having a joined portion that is joined to the footwear main body,
wherein the manufacturing includes at least one of
including identification information that identifies the footwear main body on the information label during the manufacturing of the information label, or
performing printing or processing to include the identification information on the information label after the manufacturing of the information label.

16. The method of manufacturing footwear according to claim 15, wherein
the information label is formed such that a surface area on a side that is generated on the platform is smaller than a surface area of the footwear main body.

17. The method of manufacturing footwear according to claim 15, wherein
a distance to the platform is different at a connection position between the joined portion and the footwear main body, and a connection position between the joined portion and the information label.
